# EUROPÄISCHE PATENTSCHRIFT

(11) **EP 3 000 752 B1**
(45) Veröffentlichungstag und Bekanntmachung des Hinweises auf die Patenterteilung: **08.08.2018**
(21) Anmeldenummer: 15181960.4
(22) Anmeldetag: 21.08.2015
(51) Int. Cl.: B65G 15/64, B65G 21/20, B65G 39/071

(54) **FÖRDEREINRICHTUNG**
TRANSPORT DEVICE
CONVOYEUR-TRANSPORTEUR

(30) Priorität: 17.09.2014 DE 102014218641
(43) Veröffentlichungstag der Anmeldung: 30.03.2016
(73) Patentinhaber: HOMAG GmbH, 72296 Schopfloch (DE)
(72) Erfinder: Rathgeber, Peter, 72280 Dornstetten (DE)
(74) Vertreter: Hoffmann Eitle

(56) Entgegenhaltungen:
- EP-A1- 2 614 940
- DE-A1- 1 481 024
- FR-A- 775 514
- FR-A1- 2 660 292
- JP-A- S5 467 980
- JP-A- 2003 292 275
- US-A- 207 626
- US-A- 3 951 256
- US-A- 4 015 484

## Beschreibung

### Technisches Gebiet

Die vorliegende Erfindung betrifft eine Fördereinrichtung, mit der insbesondere plattenförmige Werkstücke einer Bearbeitung, wie einer Profilbearbeitung, zugeführt werden können. Die im Rahmen der vorliegenden Anmeldung zu bearbeitenden Werkstücke sind bevorzugt Bauteile, die in der Möbel- und Bauelementeindustrie bzw. Dämmstoffplattenindustrie zum Einsatz kommen, wie Fußbodenpaneele, Türen, Tischplatten, Dämmstoffplatten oder ähnliches. Ferner betrifft die Erfindung eine Bearbeitungsmaschine mit einer solchen Fördereinrichtung.

### Stand der Technik

Im Bereich der Profilbearbeitung von Fußbodenpaneelen werden gängigerweise Doppelendprofiler eingesetzt. Doppelendprofiler umfassen eine umlaufende Förderkette sowie einen oberhalb der Förderkette angeordneten umlaufenden Riemen. Zwischen der Förderkette und dem Riemen werden die Werkstücke während ihrer Bewegung eingespannt und in diesem Zustand an Bearbeitungsstationen vorbeigeführt. An diesen Bearbeitungsstationen können verschiedenste Arbeitsschritte durchgeführt werden, wie Fräsen, Hobeln, Schleifen oder ähnliches.

Die EP 1 878 674 A1 zeigt beispielsweise ein Kettenglied für eine umlaufende Transportkette einer Werkzeugmaschine, die bei einem Doppelendprofiler zum Einsatz kommt. Das beschriebene Kettenglied ist in Umlaufrichtung betrachtet zwischen einem Laufrollenpaar und einer Laufrolle mit einem ferromagnetischen Werkstoff versehen, um bei den auftretenden hohen Geschwindigkeiten eine sichere Umlenkung an Umlenkrollen zu gewährleisten.

Ferner wird in der EP 2 614 940 A1 eine vierseitige Bearbeitungsvorrichtung beschrieben. Obwohl das in dieser Schrift beschriebene Förderband bevorzugt eine Kettenbahn ist, kann auch eine Riemenbahn oder eine Rollenbahn zum Einsatz kommen.

Durch die in der Praxis auftretenden immer höheren Fördergeschwindigkeiten sind die bekannten Förderkettensysteme an ihre Leistungsgrenze gelangt. Schwingungsprobleme sowie Zentripetalkräfte an den Umlenkrollen führen letztlich zu einem hohen Verschleiß, der eine regelmäßige Wartung der Förderkette erfordert und hierfür folglich Kosten verursacht.

Um noch höhere Fördergeschwindigkeiten zu erreichen, sind zwar Förderriemen bekannt, die auf einem Luftpolster geführt werden. Der Nachteil solcher Systeme liegt jedoch darin, dass die Riemenführung nicht ausreichend exakt gewährleistet werden kann. Gerade bei der Bearbeitung von Fußbodendielen und ähnlichen Werkstücken ist es erforderlich, eine präzise und reproduzierbare Positionierung der Werkstücke in Bezug auf die spanend bearbeitenden Werkzeuge sicher zu stellen. Darüber hinaus erweist sich das zur Führung des Förderriemens verwendete Luftpolster auch aus wirtschaftlicher Sicht nachteilig, denn die Bereitstellung des Luftpolsters erfordert einen vergleichsweise hohen Energieaufwand. Dieser schlägt sich wiederum in den Betriebskosten nieder.

Ergänzend wird auf ein weiteres Dokument hingewiesen (JP 2003 292275 A). Dieses betrifft einen Fahrgast-Förderriemen, bei dem rahmenförmige Aufnahmeteile in Abschnitten mit geringer Reibung aufgenommen werden, wobei letztere im Förderriemen ausgebildet sind.

US 4 015 484 A offenbart eine Fördereinrichtung mit einem Träger sowie einem um den Träger umlaufenden Förderband, und einem Führungsmittel, wobei das Förderband in Erstreckungsrichtung eine Profilierung aufweist, welche Profilierung mit dem Führungsmittel in Eingriff steht, wobei das Führungsmittel als zumindest eine Führungsrolle vorgesehen ist, und ferner zumindest eine erste Stützrolle zum Abstützen des Förderriemens bereitgestellt ist.

### Gegenstand der Erfindung

Die vorliegende Erfindung zielt darauf ab, die zuvor aufgeführten Probleme zu lösen und eine Fördereinrichtung bereitzustellen, die bei hoher Fördergeschwindigkeit eine exakte Ausrichtung von Werkstücken bezüglich der Bearbeitungswerkzeuge ermöglicht. Ferner sollen die Betriebs- und/oder Wartungskosten gesenkt werden.

Die vorliegende Erfindung stellt demnach eine Fördereinrichtung gemäß Anspruch 1 bereit, mit der die zuvor aufgeführten Ziele erreicht werden. Weitere Beispiele bevorzugter Ausführungsformen sind in den abhängigen Ansprüchen aufgeführt bzw. in der nachfolgenden Beschreibung erläutert.

Ein Kerngedanke der vorliegenden Erfindung ist es, einen Förderriemen einer Fördereinrichtung derart auszugestalten, dass die beim Bewegen der Werkstücke auftretenden Kräfte in optimaler Weise zwischen Förderriemen und dessen Führung abgetragen werden.

Die vorliegende Erfindung stellt eine Fördereinrichtung für eine Bearbeitungsvorrichtung zur Bearbeitung von bevorzugt plattenförmigen Werkstücken bereit. Bei solchen Werkstücken kann es sich rein beispielhaft um Fußbodenpaneele handeln. Die Fördereinrichtung umfasst einen Träger sowie einen Förderriemen. Der Förderriemen läuft um den Träger um. Ferner wird ein Führungsmittel bereitgestellt. Das Führungsmittel kann am Träger oder einem am Träger angebrachten Trägerbauteil vorgesehen sein. Der Förderriemen hat in Erstreckungsrichtung eine Profilierung, welche Profilierung mit dem Führungsmittel in Eingriff steht.

Somit kann der Förderriemen auch in einer horizontalen Richtung abgestützt werden, wodurch selbst bei hohen Fördergeschwindigkeiten eine ruhige Führung möglich ist. Nachdem die Fördergeschwindigkeiten erhöht werden können, ist es möglich, deutlich mehr Werkstücke in der gleichen Zeit zu bewegen und ggf. zu bearbeiten.

Erfindungsgemäß handelt es sich bei der Profilierung um eine Aussparung. In diese Nut kann das Führungsmittel eingreifen, und somit eine Führung in horizontaler Richtung (senkrecht zur Erstreckungsrichtung des Förderriemens) bereitstellen.

Ferner ist es erfindungsgemäß vorgesehen, dass als das zuvor genannte Führungsmittel zumindest eine Führungsrolle vorgesehen ist, wobei ferner zumindest eine erste Stützrolle zum Abstützen des Förderriemens vorgesehen sein kann. Die Kombination aus der zumindest einen Führungsrolle und der zumindest einen ersten Stützrolle ist insbesondere mehrfach vorgesehen. Dabei ist es bevorzugt, dass die Führungsrolle auch Kräfte in horizontaler Richtung abträgt, mit anderen Worten also den Förderriemen in dessen Erstreckungsrichtung geradlinig hält. Die erste Stützrolle wiederum dient in erster Linie dazu, Kräfte in vertikaler Richtung aufzunehmen. In einer bevorzugten Ausführungsform ist quer zur Erstreckungsrichtung des Förderriemens bzw. der Durchlaufrichtung seitlich zur Führungsrolle jeweils eine erste Stützrolle vorgesehen.

Der im Stand der Technik eingesetzte Druckluftmechanismus für einen Förderriemen entfällt, was wiederum zu geringeren Energiekosten führt. Gegenüber Kettenförderern werden die Ersatzteilkosten und die Wartungskosten gesenkt. Ein sogenannter Polygoneffekt an den Umlenkrollen des Förderriemens tritt gegenüber Kettenförderern in deutlich geringerem Maße bzw. nicht auf, und es wurden deutlich geringere Schwingungen beim Werkstücktransport festgestellt. Dies hat auch Auswirkungen auf Bearbeitungswerkzeuge, die an Werkstücken zum Einsatz kommen, welche mit der erfindungsgemäßen Fördereinrichtung bewegt werden. Da die Schwingungen an diesen Werkstücken reduziert werden konnten, erhöht sich die Standzeit dieser Bearbeitungswerkzeuge.

Bevorzugt befindet sich in vertikaler Richtung oberhalb der Fördereinrichtung ein endlos umlaufender Oberdruck (ggf. ebenfalls als Riemen ausgebildet), der derart angeordnet ist, dass zwischen der dem Förderriemen der Fördereinrichtung und dem Oberdruck ein Spalt für ein Werkstück ausgebildet wird.

Gemäß einer Ausführungsform der vorliegenden Erfindung handelt es sich bei der Profilierung um eine Aussparung, die im Querschnitt (senkrecht zur Erstreckungsrichtung des Förderriemens) kegelstumpfförmige, v-förmige oder u-förmige Nut ist. In diese Nut kann das Führungsmittel eingreifen, und somit eine Führung in horizontaler Richtung (senkrecht zur Erstreckungsrichtung des Förderriemens) bereitstellen.

Gemäß einer weiteren Ausführungsform der vorliegenden Erfindung umfasst der Förderriemen an seiner Auflageseite zur Auflage eines Werkstücks eine haftungssteigernde Beschichtung, insbesondere auf Polyurethanbasis. Mit einer solchen Beschichtung kann ein Werkstück beim Fördern noch besser gehalten werden, so dass ein reproduzierbares Arbeitsergebnis sichergestellt wird.

In einer Ausführungsform sind in Erstreckungsrichtung des Förderriemens eine Vielzahl von Führungsrollen und ersten Stützrolle sowie ggf. zweiten Stützrollen vorgesehen.

Gemäß einer weiteren Variante der vorliegenden Erfindung sind an einer in vertikaler Richtung oberen Seite des Trägers die Führungsrolle und die erste Stützrolle jeweils in Vorsprüngen eines Trägerbauteils eingehängt sind (Einzelaufhängung der Stützrolle bzw. Führungsrolle), oder eine Vielzahl von an einem Trägerbauteil gelagerten Drehwellen die Führungsrolle und die erste Stützrolle gemeinsam aufnehmen. Sind die Führungsrolle und die erste Stützrolle einzeln drehbar gelagert, so handelt es sich bevorzugt um ein Bauteil mit Rolle und Welle/Kugellager.

In einer weiteren Variante können zwischen der ersten Stützrolle und der Führungsrolle eine zweite Stützrolle vorgesehen sein, deren Drehachse in Erstreckungsrichtung des Förderriemens versetzt zur Drehachse der ersten Stützrolle und/oder Führungsrolle angeordnet ist. Auch in diesem Fall ist eine individuelle Lagerung der genannten Rollen möglich. In einer bevorzugten Ausführungsform ist quer zur Erstreckungsrichtung des Förderriemens bzw. der Durchlaufrichtung seitlich zur Führungsrolle jeweils eine erste Stützrolle und zwischen der Führungsrolle und der ersten Stützrolle eine zweite Stützrolle vorgesehen.

Ferner sind die Drehwellen gemäß einer weiteren Modifikation der vorliegenden Erfindung an einem gemeinsamen Trägerbauteil befestigt, das permanent am Träger fixiert ist, beispielsweise verschweißt, verschraubt oder angeklebt ist. Auf diese Weise wird eine steife Konstruktion bereitgestellt.

Gemäß einer weiteren Ausführungsform ist die Führungsrolle bzgl. des Trägerbauteils mittig angeordnet und jeweils seitlich zur Führungsrolle eine erste Stützrolle angeordnet. Dies führt zu einer besonders laufruhigen Konstruktion.

Gemäß einer weiteren Modifikation zeichnet sich die erfindungsgemäße Fördereinrichtung dadurch aus, dass der Durchmesser der Führungsrolle größer ist als der Durchmesser der ersten Stützrolle. Somit kann die Führungsrolle in die Aussparung des Förderriemens eindringen, während die erste Stützrolle zu einer zum Träger der Fördereinrichtung weisenden Führungsseite des Förderriemens weist.

Gemäß einer weiteren Ausführungsform der vorliegenden Erfindung ist es vorgesehen, dass sich die Drehachse der ersten Stützrolle in horizontaler Richtung erstreckt, und sich die Drehachse der Führungsrolle in vertikaler Richtung erstreckt. Auf diese Weise sind die auf die Stützrolle und die Führungsrolle wirkenden Kräfte entkoppelt.

Gemäß einer Ausführungsform der vorliegenden Erfindung sind ferner an einer in vertikaler Richtung unteren Seite des Trägers eine Vielzahl von Drehwellen vorgesehen, welche Drehwellen jeweils mindestens eine dritte Stützrolle, bevorzugt zwei dritte Stützrollen, aufnehmen. Auf diese Weise kann der Förderriemen straff und sicher geführt werden.

Die Fördereinrichtung gemäß den zuvor beschriebenen Ausführungsformen wird bevorzugt in einer Bearbeitungsmaschine, wie einem Doppelendprofiler eingesetzt. Da die Werkstücke sicher und mit hohen Geschwindigkeiten gefördert werden können, kann der Durchsatz einer solchen Bearbeitungsmaschine gesteigert werden.

Ferner ist die Erfindung auf eine Bearbeitungsmaschine mit einer Fördereinrichtung gemäß einem der vorangegangenen Aspekte sowie deren Varianten gerichtet, welche Bearbeitungsmaschine zumindest ein Aggregat zur Schmalflächen- oder Profilierungsbearbeitung umfasst. Das Aggregat ist (in Durchlaufrichtung betrachtet) bevorzugt seitlich zum Träger vorgesehen. Insbesondere ist in vertikaler Richtung oberhalb der Fördereinrichtung ein endlos umlaufender Oberdruck vorgesehen, der derart angeordnet ist, dass zwischen der dem Förderriemen der Fördereinrichtung und dem Oberdruck ein Spalt für ein Werkstück ausgebildet wird.

Die Bearbeitungsmaschine kann ferner mindestens eine Stützkufe aufweien, die sich seitlich neben dem Förderriemen und im Wesentlichen parallel zu diesem erstreckt. Bevorzugt ist die Stützkufe im Wirkbereich eines Aggregats zur Schmalflächen- oder Profilierungsbearbeitung angeordnet. Diese Anordnung ist insbesondere bei der Bearbeitung von Fußbodenpaneelen geeignet, um eine Abstützung der Fußbodenpaneele während der Bearbeitung durch das Aggregat sicherzustellen.

In einer weiteren Variante kann beidseitig des Förderriemens jeweils gegenüberliegend eine Stützkufe vorgesehen sein. Auch diese Stützkufen sind bevorzugt im Wirkbereich eines Aggregats zur Schmalflächen- oder Profilierungsbearbeitung angeordnet.

Zusätzlich kann eine federnd gelagerte Druckschiene vorgesehen sein, die sich oberhalb der Stützkufe und im Wesentlichen parallel zu dieser erstreckt. Auf diese Weise können auch Werkstücke unterschiedlicher Dicke während der Bearbeitung abgestützt werden.

### Kurze Beschreibung der Zeichnungen

- Figur 1: ist eine perspektivische Ansicht eines Teils der erfindungsgemäßen Fördereinrichtung.

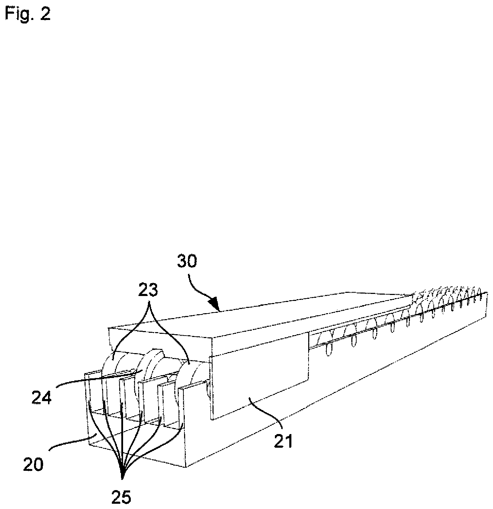

- Figur 2: ist eine perspektivische Detailansicht der in Figur 1 dargestellten Ausführungsform.
- Figur 3: ist eine Vorderansicht der in Figur 2 dargestellten Detailansicht.
- Figur 4a: zeigt eine zweite Ausführungsform, die nicht Teil der Erfindung ist.
- Figur 4b: zeigt eine dritte Ausführungsform der vorliegenden Erfindung.
- Figur 5: ist eine schematische Seitenansicht einer Bearbeitungsmaschine mit der erfindungsgemäßen Fördereinrichtung

### Detaillierte Beschreibung der bevorzugten Ausführungsformen

Nachfolgend werden bevorzugte Ausführungsformen der vorliegenden Erfindung im Detail unter Bezugnahme auf die beigefügten Zeichnungen erläutert. Weitere in diesem Zusammenhang genannte Modifikationen einzelner Merkmale der beschriebenen Ausführungsformen können jeweils einzeln miteinander kombiniert werden, um neue Ausführungsformen auszubilden.

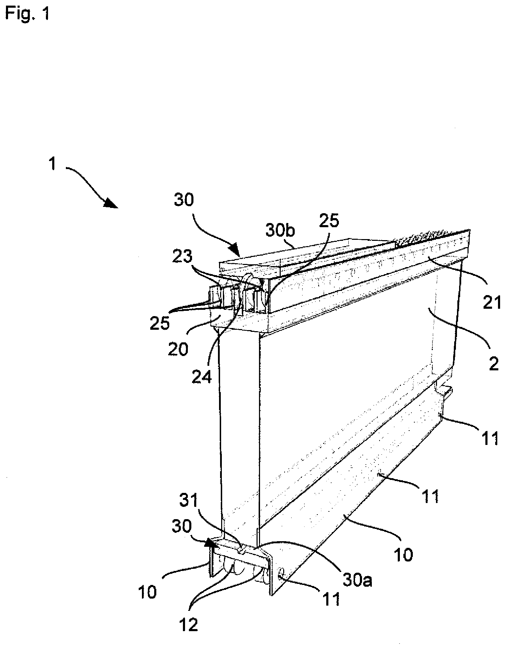

In Figur 1 ist ein Ausschnitt der erfindungsgemäßen Fördereinrichtung 1 dargestellt.

Die Fördereinrichtung 1 umfasst einen Ständer bzw. Träger 2, der über beidseitig angebrachte Schienen 10 gegenüber dem Untergrund abgestützt wird. Die Schienen 10 bilden zusammen mit einem unteren Abschnitt des Trägers 2 einen entlang des Trägers 2 verlaufenden Zwischenraum, innerhalb welchem ein umlaufender Förderriemen 30 unterhalb des Trägers 2 geführt wird.

Beim Förderriemen 30 handelt es sich um einen endlos umlaufenden Förderriemen, der eine Führungsseite 30a sowie eine Auflageseite 30b aufweist. Während die Führungsseite 30a zum Träger 2 weist, zeigt die Auflageseite 30b in die entgegengesetzte Richtung. Beispielsweise kann der Förderriemen Zugstränge umfassen, die in einem Matrixmaterial aufgenommen sind.

In der ersten Ausführungsform der vorliegenden Erfindung ist im Bereich der Führungsseite 30a eine in Erstreckungsrichtung des Förderriemens 30 verlaufende Aussparung 31 vorgesehen, deren Funktion später im Detail erläutert werden soll.

In der in Figur 1 gezeigten Ausführungsform hat der Förderriemen 30 eine Dicke von ca. 8 mm, und eine Breite (quer zur Erstreckungsrichtung) von 30-80mm, bevorzugt 40-50 mm. Die Aussparung 31 ist in der Breitenrichtung im Wesentlichen mittig vorgesehen.

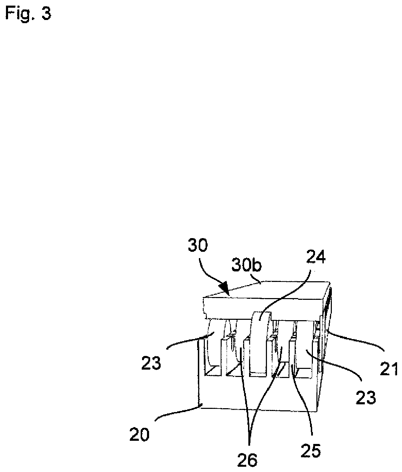

In einem in vertikaler Richtung oberhalb des Trägers 2 angeordneten Bereich ist ein Trägerbauteil 20 mit dem Träger 2 verbunden, beispielsweise verschweißt. Das Trägerbauteil 20 nimmt eine Vielzahl Führungsrollen und Stützrollen auf, die jeweils einzeln an Vorsprüngen 25 des Trägerbauteils gelagert werden. In der vorliegenden Ausführungsform sind in einer horizontalen Linie quer zur Förderrichtung/ Erstreckungsrichtung des Förderriemens 30 zwei erste Stützrollen 23 sowie eine Führungsrolle 24 angebracht. Versetzt hierzu werden zwischen den ersten Stützrollen und der Führungsrolle jeweils eine zweite Stützrolle 26 vorgesehen (siehe Figur 3). Mit anderen Worten ist die Führungsrolle 24 in Bezug auf das Trägerbauteil 20 in etwa mittig angeordnet.

Am Trägerbauteil 20 sind seitlich Abdeckungen 21 befestigt (in Figur 1 ist lediglich eine Abdeckung 21 gezeigt), die als Staubschutz für die ersten Stützrollen 23, die zweiten Stützrollen 26 und die Führungsrolle 24 dienen.

Die Führungsrolle 24 hat einen etwas größeren Durchmesser als die beiden ersten Stützrollen 23 bzw. die zweiten Stützrollen 26. Somit steht die Führungsrolle 24 in vertikaler Richtung weiter vom Trägerbauteil 20 hervor als die beiden zweiten Stützrollen 23.

Die Führungsrolle 24 dringt demnach zumindest abschnittsweise in die Ausnehmung 31 des Förderriemens 30 ein. Dabei ist die Ausnehmung 31 derart ausgestaltet, dass die Führungsrolle 24 die Grundfläche der Ausnehmung 31 berührt und somit vom Förderriemen 30 Kräfte in vertikaler Richtung auf die Führungsrolle 24 übertragen werden. Ferner stellt die Führungsrolle 24 eine seitliche (horizontale) Führung des Förderriemens 30 sicher, wobei in horizontaler Richtung ein gewisses Spiel zwischen der Führungsrolle 24 und der Seitenwand der Ausnehmung 31 vorliegt.

In der vorliegenden Ausführungsform hat die Ausnehmung 31 dabei im Querschnitt eine kegelstumpfförmige Kontur. Diese erweist sich bei der Führung des Förderriemens 30 in horizontaler Richtung als vorteilhaft.

Die ersten Stützrollen 23 und die zweiten Stützrollen 26 haben primär die Aufgabe, den Förderriemen 30 derart aufzunehmen, dass auch in vertikaler Richtung wirkende Kräfte vom Förderriemen 30 auf die Stützrollen 23 übertragen werden. Derartige Kräfte treten auf, wenn ein Werkstück an der Auflageseite 30b des Förderriemens 30 aufgebracht wird und gegebenenfalls zusätzlich ein gegenüberliegender (nicht dargestellter) Förderriemen eine Druckkraft auf dem Werkstück aufbringt. Die Führungsrollen 24 übernehmen zusätzlich zur vertikalen Abstützung die Aufgabe der Führung in horizontaler Richtung.

Im Ergebnis wird somit durch eine Kombination der ersten Stützrollen 23, der zweiten Stützrollen 26 und der Führungsrolle 24 eine in vertikaler und horizontaler Richtung exakte Führung des Förderriemens 30 sichergestellt.

Zwischen den am Träger 2 in dessen unteren Abschnitt angebrachten Schienen 10 sind Drehwellen 11 vorgesehen, die dritte Stützrollen 12 aufnehmen. In der vorliegenden Ausführungsform sind an den Drehwellen 11 jeweils zwei dritte Stützrollen 12 vorgesehen, auf denen der Förderriemen 30 aufliegt. Allerdings ist es gemäß einer Modifikation möglich, anstelle der zwei dritten Stützrollen 12 lediglich eine Stützrolle an einer Drehwelle 11 anzubringen, oder alternativ auch mehr als zwei dritte Stützrollen 12.

Die ersten Stützrollen 23 und zweiten Stützrollen 26 sind in der vorliegenden Ausführungsform im Wesentlichen gleich wie die dritten Stützrollen 12 dimensioniert.

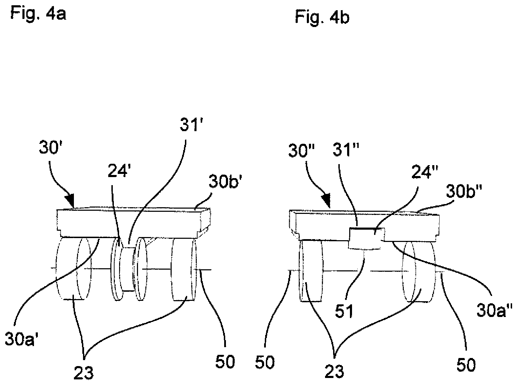

In Figur 4a zeigt eine zweite Ausführungsform, insbesondere einen Förderriemen 30' mit einer Führungsseite 30a' und einer Auflageseite 30b'. Diese unterscheidet sich im Wesentlichen darin von der ersten Ausführungsform, dass der Förderriemen 30' einen Vorsprung 31' an der Führungsseite 30a' aufweist, welcher Vorsprung 31' im Querschnitt (quer zur Erstreckungsrichtung des Förderriemens 30') eine kegelstumpfförmige oder V-förmige Kontur hat. In einer Variante der zweiten Ausführungsform hat der Vorsprung 31' eine im Querschnitt rechteckige Kontur.

Komplementär zur Kontur des Vorsprungs 31' hat die Führungsrolle 24' der zweiten Ausführungsform eine Vertiefung, in die der Vorsprung 31' des Förderriemens 30' eingreift. Die ersten Stützrollen 23 der zweiten Ausführungsform sind entsprechend zu den ersten Stützrollen der ersten Ausführungsform ausgebildet und in horizontaler Richtung seitlich zur Führungsrolle 24' angeordnet. Entsprechendes gilt für ggf. weitere vorhandene Stützrollen entsprechend den zweiten Stützrollen der ersten Ausführungsform.

In Figur 4b wird eine dritte Ausführungsform der vorliegenden Erfindung dargestellt. Wiederum umfasst der Förderriemen 30" eine Führungsseite 30a" sowie eine Auflageseite 30b". Gemäß der dritten Ausführungsform sind zwei erste Stützrollen 23 vorgesehen, die in der dargestellten Ausführungsform an einer gemeinsamen Drehwelle angeordnet sind. Diese Anordnung entspricht im Wesentlichen der ersten Ausführungsform.

Die Führungsrolle 24" der dritten Ausführungsform der vorliegenden Erfindung ist jedoch um eine vertikale Drehachse 51 drehbar angeordnet. Die ersten Stützrollen 23 sind um horizontal verlaufende Drehachsen 50 drehbar angeordnet, können jedoch auch eine gemeinsame Drehachse in horizontaler Richtung aufweisen. Entsprechendes gilt für ggf. weitere vorhandene Stützrollen entsprechend den zweiten Stützrollen der ersten Ausführungsform.

Der Förderriemen 30" der dritten Ausführungsform umfasst an der Führungsseite 30a" des Förderriemens 30" eine in Erstreckungsrichtung des Förderriemens 30" verlaufende Ausnehmung 31", die im Querschnitt betrachtet ein rechtwinkliges Profil ausbildet. In dieses Profil der Ausnehmung 31" greift die Führungsrolle 24" ein, und gewährleistet auf diese Weise eine Abstützung des Förderriemens 30" in horizontaler Richtung.

Dabei berührt die Führungsrolle 24" den Boden der Ausnehmung 31" nicht. Um eine verbesserte bzw. gleichmäßigere Abstützung in vertikaler Richtung zu erreichen, kann eine Führungsrolle 24" mit vertikaler Drehachse 51 im Wechsel zu einer Führungsrolle 24 mit horizontaler Drehachse vorgesehen sein.

Gemäß einer weiteren Variante der vorliegenden Erfindung ist der Förderriemen 30, 30', 30" gemäß den zuvor beschriebenen Ausführungsformen an der Auflageseite 30b mit einer Beschichtung versehen, mit der das an dieser Seite des Förderriemens aufliegende Werkstück während des Förderns besser gehalten werden kann.

Gemäß den zuvor beschriebenen Ausführungsformen wird die Führung des Förderriemens 30, 30', 30" in horizontaler Richtung in einem im Wesentlichen mittigen Abschnitt bereitgestellt. Allerdings ist es gemäß weiteren Varianten der vorliegenden Erfindung möglich, die Führungsrolle versetzt anzuordnen oder mehrere Führungsrollen zwischen den ersten/zweiten Stützrollen 23/24 vorzusehen.

Darüber hinaus ist es gemäß weiteren Varianten möglich, die Führungsrolle mit den ersten Stützrollen zu vertauschen, sodass gemäß diesen Varianten der beschriebenen Ausführungsformen zwei Führungsrollen seitlich zu einer im Wesentlichen mittig angeordneten ersten Stützrolle vorgesehen sind.

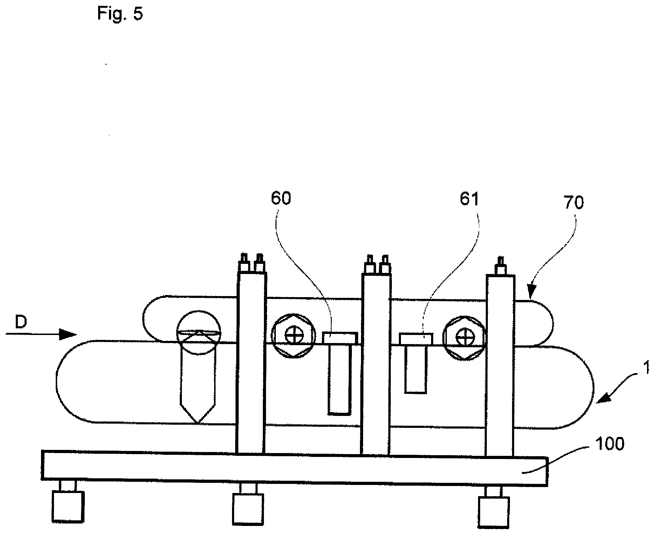

Fig. 5 ist eine schematische Seitenansicht einer Bearbeitungsmaschine, nämlich eines Doppelendprofilers, bei der die Fördereinrichtung 1 gemäß der vorliegenden Erfindung zum Einsatz kommt. Die Fördereinrichtung 1 wird gemäß dieser Ausführungsform auf einem Gestell 100 abgestützt.

In der Bearbeitungsmaschine zur Schmalflächen- oder Profilierungsbearbeitung ist die Fördereinrichtung 1 vorgesehen, die ein Werkstück an dessen Unterseite erfasst und entlang mehrerer ggf. schwenkbarer Schmalflächen- oder Profilierungsbearbeitungsaggregate 60 und 61 vorbeiführt (Durchlaufrichtung D). Die Fördereinrichtung 1 kann einen oder mehrere Förderriemen 30 aufweisen. Besonders bevorzugt sind zwei parallele Förderriemen 30.

In vertikaler Richtung oberhalb der Fördereinrichtung 1 ist ein endlos umlaufender Oberdruck 70 vorgesehen, der derart angeordnet ist, dass zwischen dem Förderriemen 30 der Fördereinrichtung 1 und dem (nicht dargestellten) Förderriemen des Oberdrucks 70 ein Spalt für ein Werkstück ausgebildet wird. Durch eine entsprechende Dimensionierung des Spalts wird ein Werkstück geklemmt, so dass im Durchlauf verschiedene Bearbeitungsschritte durchgeführt werden können, ohne dass das Werkstück verrutscht.

In der in Fig. 5 dargestellten Bearbeitungsmaschine können verschiedene Bearbeitungsarten durchgeführt werden, insbesondere spanende Bearbeitungen wie Hobeln, Nuten, Schleifen, Sägen oder Fräsen. Beispielsweise kann es sich bei den Aggregaten zur Schmalflächen- oder Profilierungsbearbeitung 60 und 61 um Profilfräsen oder Profilschleifeinrichtungen handeln, mit denen die Werkstücke in einem seitlichen Randbereich bearbeitet werden, während die Werkstücke mit der Fördereinrichtung gehalten und gefördert werden. Dies betrifft insbesondere die Schmalseite eines Werkstücks, jedoch ggf. auch teilweise dessen Hauptseiten.

Obwohl in den Figuren nicht explizit gezeigt, kann es vorgesehen sein, dass die Bearbeitungsmaschine ferner mindestens eine Stützkufe aufweist, die sich seitlich neben dem Förderriemen und im Wesentlichen parallel zu diesem erstreckt. Durch die mindestens eine Stützkufe lässt sich eine Bezugsebene für die geförderten Werkstücke definieren, so dass eine zusätzliche Abstützung der Werkstücke während des Bearbeitungsvorgangs ermöglicht wird. In einer weiteren Variante kann beidseitig des Förderriemens jeweils gegenüberliegend eine Stützkufe vorgesehen sein.

Zusätzlich kann eine federnd gelagerte Druckschiene vorgesehen sein, die sich oberhalb der Stützkufe und im Wesentlichen parallel zu dieser erstreckt. Durch die Druckschiene lassen sich zusammen mit einer darunter angeordneten Stützkufe plattenförmige Werkstücke stabil führen, um eine exakte Positionierung zu erreichen und ein Ausweichen des Werkstücks während einer Bearbeitung durch ein Bearbeitungswerkzeug zu vermeiden.

## Patentansprüche

1. Fördereinrichtung (1) für eine Bearbeitungsvorrichtung zur Bearbeitung von bevorzugt plattenförmigen Werkstücken, beispielsweise Fußbodenpaneelen, mit einem Träger (2) sowie einem um den Träger (2) umlaufenden Förderriemen (30, 30"), und einem Führungsmittel (24, 24"), wobei der Förderriemen (30, 30") in Erstreckungsrichtung eine Profilierung (31, 31") aufweist, welche Profilierung (31, 31") mit dem Führungsmittel (24, 24") in Eingriff steht, wobei die Profilierung eine Aussparung (31, 31") ist, und wobei als das Führungsmittel zumindest eine Führungsrolle (24, 24") vorgesehen ist, und ferner zumindest eine erste Stützrolle (23) zum Abstützen des Förderriemens (30) bereitgestellt ist.

2. Fördereinrichtung gemäß Anspruch 1, bei der die Aussparung eine im Querschnitt kegelstumpfförmige, v-förmige oder u-förmige Nut ist.

3. Fördereinrichtung gemäß einem der vorangegangenen Ansprüche, **dadurch gekennzeichnet, dass** der Förderriemen (30, 30") an seiner Auflageseite (30b) zur Auflage eines Werkstücks eine haftungssteigernde Beschichtung, insbesondere auf Polyurethanbasis, aufweist.

4. Fördereinrichtung gemäß einem der vorangegangenen Ansprüche, **dadurch gekennzeichnet, dass** an einer in vertikaler Richtung oberen Seite des Trägers (2) die Führungsrolle (24) und die erste Stützrolle (23) jeweils in Vorsprüngen (25) eines Trägerbauteils (20) eingehängt sind, oder
eine Vielzahl von an einem Trägerbauteil (20) gelagerten Drehwellen die Führungsrolle (24, 24") und die erste Stützrolle (23) gemeinsam aufnehmen.

5. Fördereinrichtung gemäß einem der vorangegangenen Ansprüche, **dadurch gekennzeichnet, dass** zwischen der ersten Stützrolle (23) und der Führungsrolle (24) eine zweite Stützrolle (26) vorgesehen ist, wobei die Drehachse der ersten Stützrolle (23) in Erstreckungsrichtung des Förderriemens (30) versetzt zur Drehachse der zweiten Stützrolle (26) angeordnet ist.

6. Fördereinrichtung gemäß Anspruch 5, **dadurch gekennzeichnet, dass** das Trägerbauteil (20) permanent am Träger (2) fixiert, beispielsweise verschweißt, verschraubt oder verklebt, ist.

7. Fördereinrichtung gemäß Anspruch 5 oder 6, **dadurch gekennzeichnet, dass** die Führungsrolle (24, 24") bzgl. des Trägerbauteils (20) mittig angeordnet ist und jeweils seitlich zur Führungsrolle (24, 24") eine erste Stützrolle (23) angeordnet ist.

8. Fördereinrichtung gemäß einem der vorangegangenen Ansprüche, **dadurch gekennzeichnet, dass** der Durchmesser der Führungsrolle (24, 24") größer als der Durchmesser der ersten Stützrolle (23) ist.

9. Fördereinrichtung gemäß Anspruch 1, **dadurch gekennzeichnet, dass**
sich die Drehachse (50) der ersten Stützrolle (23) in horizontaler Richtung erstreckt, und
sich die Drehachse (51) der Führungsrolle (24") in vertikaler Richtung erstreckt.

10. Fördereinrichtung gemäß Anspruch 9, **dadurch gekennzeichnet, dass** in Erstreckungsrichtung des Förderriemens (30) eine Führungsrolle (24") mit vertikaler Drehachse (51) und eine Führungsrolle mit horizontaler Drehachse wechselweise angeordnet sind.

11. Fördereinrichtung gemäß einem der vorangegangenen Ansprüche, **dadurch gekennzeichnet, dass** an einer in vertikaler Richtung unteren Seite des Trägers (2) eine Vielzahl von Drehwellen (11) vorgesehen sind, welche Drehwellen (11) jeweils zumindest eine dritte Stützrolle (12), bevorzugt zwei dritte Stützrollen (12), aufnehmen.

12. Bearbeitungsmaschine mit einer Fördereinrichtung gemäß einem der vorangegangenen Ansprüche sowie zumindest einem Aggregat zur Schmalflächen- oder Profilierungsbearbeitung (60, 61), wobei bevorzugt mindestens eine Stützkufe vorgesehen ist, die sich seitlich neben dem Förderriemen und im Wesentlichen parallel zu diesem erstreckt.

## Claims

1. A conveyor device (1) for a machining apparatus for machining preferably panel-shaped workpieces, for example floor panels, comprising a support (2) as well as a conveyor belt (30, 30") circulating around the support (2) and a guide means (24, 24"),
the conveyor belt (30, 30") having profiling (31, 31") in the direction of extension, which profiling (31, 31") is in engagement with the guide means (24, 24"), the profiling being a recess (31, 31"), and at least one guide roller (24, 24") being provided as the guide means, and furthermore at least one first support roller (23) being provided for supporting the conveyor belt (30).

2. The conveyor device according to Claim 1, wherein the recess is a groove with a truncated cone-shaped, v-shaped or u-shaped cross-section.

3. The conveyor device according to any of the preceding claims, **characterised in that** the conveyor belt (30, 30") has an adhesion-enhancing coating, in particular a polyurethane-based coating, on its contact side (30b) on which a workpiece is placed.

4. The conveyor device according to any of the preceding claims, **characterised in that** on a side of the support (2) that is an upper side in a vertical direction, the guide roller (24) and the first support roller (23) are each hooked into protrusions (25) of a support component (20), or a plurality of rotating shafts mounted on a support component (20) receive the guide roller (24, 24") and the first support roller (23) together.

5. The conveyor device according to any of the preceding claims, **characterised in that** a second support roller (26) is provided between the first support roller (23) and the guide roller (24), the rotational axis of the first support roller (23) being arranged in the direction of extension of the conveyor belt (30) offset with respect to the rotational axis of the second support roller (26).

6. The conveyor device according to Claim 5, **characterised in that** the support component (20) is permanently fixed to the support (2), for example welded, screwed or adhered.

7. The conveyor device according to Claim 5 or 6, **characterised in that** the guide roller (24, 24") is centrally positioned with respect to the support component (20) and a first support roller (23) is disposed on either side of the guide roller (24, 24").

8. The conveyor device according to any of the preceding claims, **characterised in that** the diameter of the guide roller (24, 24") is greater than the diameter of the first support roller (23).

9. The conveyor device according to Claim 1, **characterised in that**
the rotational axis (50) of the first support roller (23) extends in a horizontal direction, and
the rotational axis (51) of the guide roller (24") extends in a vertical direction.

10. The conveyor device according to Claim 9, **characterised in that** a guide roller (24") with a vertical rotational axis (51) and a guide roller with a horizontal rotational axis are alternately arranged in a direction of extension of the conveyor belt (30).

11. The conveyor device according to any of the preceding claims, **characterised in that** on a side of the support (2) that is a lower side in a vertical direction, a plurality of rotating shafts (11) is provided, which rotating shafts (11) each receive at least one third support roller (12), preferably two third support rollers (12).

12. A machining device comprising a conveyor device according to any of the preceding claims as well as at least one unit for narrowing a surface or profiling machining (60, 61), preferably at least one support skid being provided which extends laterally next to the conveyor belt and substantially parallel thereto.

## Revendications

1. Dispositif de transport (1) pour un dispositif d'usinage destiné à l'usinage de pièces de préférence en forme de plaques, par exemple de panneaux de planchers, avec
un support (2) ainsi qu'une courroie transporteuse (30, 30") tournant autour du support (2) et
un moyen de guidage (24, 24"),
dans lequel la courroie transporteuse (30, 30") présente un profil (31, 31") dans sa direction d'extension, lequel profil (31, 31") est en prise avec le moyen de guidage (24, 24"), dans lequel le profil est un évidement (31, 31"),
et dans lequel au moins un galet de guidage (24, 24") est prévu comme le moyen de guidage, et en outre au moins un premier galet d'appui (23) est mis à disposition pour donner appui à la courroie transporteuse (30).

2. Dispositif de transport selon la revendication 1, dans lequel l'évidement est une rainure dont la section transversale est en forme de cône tronqué, en forme de v ou en forme de u.

3. Dispositif de transport selon l'une quelconque des revendications précédentes, **caractérisé en ce que** la courroie transporteuse (30, 30") présente sur son côté de support (30b) destiné à supporter une pièce, un revêtement augmentant l'adhérence, en particulier à base de polyuréthane.

4. Dispositif de transport selon l'une quelconque des revendications précédentes, **caractérisé en ce que**, au niveau d'un côté supérieur dans la direction verticale du support (2), le galet de guidage (24) et le premier galet d'appui (23) sont accrochés à chaque fois dans des parties en saillie (25) d'un élément de support (20), ou
une pluralité d'arbres de rotation logés au niveau d'un élément de support (20) reçoit conjointement le galet de guidage (24, 24") et le premier galet d'appui (23).

5. Dispositif de transport selon l'une quelconque des revendications précédentes, **caractérisé en ce qu'**un deuxième galet d'appui (26) est prévu entre le premier galet d'appui (23) et le galet de guidage (24), dans lequel l'axe de rotation du premier galet d'appui (23) est agencé avec un décalage, dans la direction d'extension de la courroie transporteuse (30), par rapport à l'axe de rotation du deuxième galet d'appui (26).

6. Dispositif de transport selon la revendication 5, **caractérisé en ce que** l'élément de support (20) est fixé au support (2) de manière permanente, par exemple soudé, vissé ou collé.

7. Dispositif de transport selon la revendication 5 ou 6, **caractérisé en ce que** le galet de guidage (24, 24") relatif à l'élément de support (20) est agencé au centre et un premier galet d'appui (23) est agencé à chaque fois latéralement par rapport au galet de guidage (24, 24").

8. Dispositif de transport selon l'une quelconque des revendications précédentes, **caractérisé en ce que** le diamètre du galet de guidage (24, 24") est supérieur au diamètre du premier galet d'appui (23).

9. Dispositif de transport selon la revendication 1, **caractérisé en ce que** l'axe de rotation (50) du premier galet d'appui (23) s'étend dans la direction horizontale, et
l'axe de rotation (51) du galet de guidage (24") s'étend dans la direction verticale.

10. Dispositif de transport selon la revendication 9, **caractérisé en ce qu'**un galet de guidage (24") avec axe de rotation vertical (51) et un galet de guidage avec axe de rotation horizontal sont agencés en alternance dans la direction d'extension de la courroie transporteuse (30).

11. Dispositif de transport selon l'une quelconque des revendications précédentes, **caractérisé en ce qu'**une pluralité d'arbres de rotation (11) est prévue au niveau d'un côté inférieur, dans la direction verticale, du support (2), lesquels arbres de rotation (11) reçoivent à chaque fois au moins un troisième galet d'appui (12), de préférence deux troisièmes galets d'appui (12).

12. Machine d'usinage avec un dispositif de transport selon l'une quelconque des revendications précédentes ainsi qu'avec au moins une unité destinée à l'usinage de surfaces étroites ou de profils (60, 61), dans laquelle au moins un patin d'appui est de préférence prévu, lequel s'étend latéralement à côté de la courroie transporteuse et sensiblement parallèlement à celle-ci.
